# DEMANDE DE BREVET EUROPEEN

(11) **EP 3 961 110 A1**
(43) Date de publication de la demande: **02.03.2022**
(21) Numéro de dépôt: 21192964.1
(22) Date de dépôt: 25.08.2021
(51) Int. Cl.: F24D 19/02, A47K 10/06, D06F 58/16, F28D 21/00, F28F 9/00, F28F 9/02, F24D 13/02

(54) **APPAREIL DE CHAUFFAGE EQUIPE D'UN DISPOSITIF DE FIXATION MURALE REGLABLE EN HAUTEUR**

(30) Priorité: 25.08.2020 FR 2008683
(71) Demandeur: Texas De France, 13854 Aix en Provence (FR)
(72) Inventeur: BLOUIN, Philippe, 13510 EGUILLES (FR); VIENNET, Raphaël, 13100 Aix-en-Provence (FR)
(74) Mandataire: Roman, Alexis

(57) **Abrégé**

L'invention concerne un appareil de chauffage (1) comportant au moins un montant vertical pourvu d'un dispositif de fixation, ledit dispositif comprend :
- une glissière (4) installée sur une paroi arrière (21) du montant (2),
- un élément de fixation (5) adapté pour se déplacer le long de la glissière,
- un moyen (7) de blocage de l'élément de fixation dans la glissière,
**et dans lequel :**
- la glissière présente deux parois latérales (41, 42) définissant une gorge (G), une desdites parois latérales présentant un retour (410),
- l'élément de fixation coopère avec un crochet (6) en prise avec le retour, et qui s'engage frontalement dans la gorge,
- le moyen de blocage est une vis (7) en prise avec l'élément de fixation et avec le crochet de sorte qu'un vissage de ladite vis assure un contact de blocage entre ledit crochet et le retour.

## Description

### Domaine technique.

L'invention a pour objet un appareil de chauffage pourvu d'un dispositif de fixation murale réglable en hauteur.

Elle concerne les appareils électriques de chauffage destinés à être fixés contre un mur, et plus particulièrement le domaine des sèche-serviettes électriques.

### État de la technique.

Les sèche-serviettes comportent généralement au moins un montant vertical sur lequel sont installées des barres de séchage, lequel montant est fixé contre un mur. Le montant doit être écarté du mur afin de laisser un espace de 5 cm à 10 cm entre ledit mur et les barres de séchage pour le passage des serviettes. Pour cela, ils sont équipés de fixations murales les écartant du mur.

Les fixations traditionnelles de sèche-serviettes ont un emplacement fixe, et elles sont vissées dans le mur. De telles fixations sont par exemple décrites dans le document brevet WO2011/130786 (AVENIR FUTUR DESIGN). L'emplacement des trous de fixation dans le mur est donc imposé par la position souhaitée du sèche-serviettes. De plus, si le sèche-serviettes s'avère trop haut ou trop bas à l'usage, il ne peut pas être déplacé sans avoir à percer de nouveaux trous de fixation.

Le document brevet EP 2.224.177 (KERMI) divulgue un radiateur électrique pourvu d'un dispositif de fixation murale permettant d'ajuster la position verticale dudit radiateur par rapport au mur sur lequel il est destiné à être fixé. Plus particulièrement, c'est la fixation murale qui a une possibilité de débattement vertical, ce débattement étant autorisé par un mécanisme complexe de coulisseau. Ce débattement est toutefois très court de sorte que les possibilités de réglage de la hauteur du radiateur sont, en pratique, limitées.

Le document brevet EP 2.992.797 (TEXAS) décrit un sèche-serviettes comportant au moins un montant vertical sur lequel sont fixées des barres de séchage, lequel montant est pourvu d'un dispositif de fixation murale adapté pour écarter ledit sèche-serviettes du mur sur lequel il est destiné à être fixé et adapté pour régler la hauteur dudit sèche-serviettes par rapport audit mur. Le dispositif de fixation murale comprend : - une glissière longitudinale verticale installée dans une paroi arrière du montant ; - un premier élément de fixation adapté pour se déplacer verticalement le long de la glissière de manière à régler la position verticale de l'appareil ; - un moyen de blocage en position du premier élément de fixation dans la glissière. L'utilisation d'une telle glissière permet de déplacer l'emplacement des fixations murales le long du montant. Ainsi, les trous de fixation peuvent être placés à des endroits particulièrement favorables à leur perçage, comme par exemple dans des joints de carrelage, la position du sèche-serviettes étant réglable par rapport à ces trous. L'utilisateur peut en outre facilement et rapidement ajuster la position verticale, c'est-à-dire la hauteur, de son sèche-serviettes sans avoir à percer de nouveaux trous.

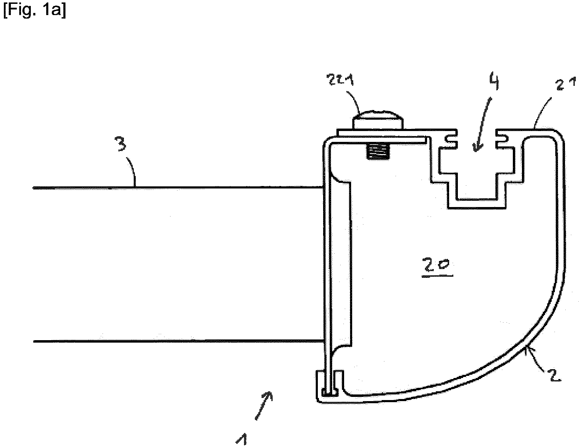

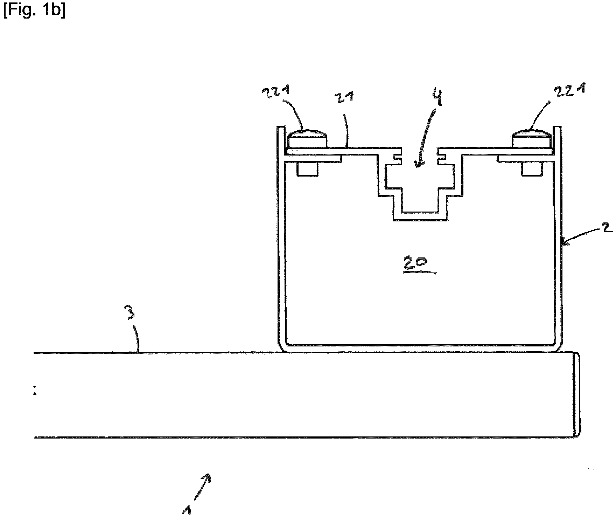

La solution décrite dans EP 2.992.797 est illustrée sur les figures 1a et 1b. La figure 1a illustre un dispositif de fixation convenant notamment à des sèche-serviettes 1 comprenant des barres de séchage de section circulaire 3 et la figure 1b un dispositif de fixation convenant notamment à des sèche-serviettes 1 dont les barres de séchage 3 sont plates (par exemple de section sensiblement carrée ou rectangulaire).

Dans les deux configurations, les barres 3 sont fixées sur au moins un montant vertical 2. Ce montant est creux de sorte qu'il présente une cavité interne 20 dans laquelle sont généralement installés les câblages électriques des résistances chauffantes, la carte électronique d'un thermostat et/ou différentes connectiques. La glissière 4 est intégrée dans la face arrière 21 du montant 2 et s'étend à l'intérieur de la cavité 20, sur une profondeur qui peut aller de 5 mm à 2 cm. Un problème lié à la solution décrite dans EP 2.992.797 est qu'elle nécessite d'utiliser un système à écrou prisonnier (ou coulisseau) coulissant dans la glissière. Ces écrous sont dits « prisonniers » car les extrémités inférieure et supérieure de la glissière sont généralement obturées par des caches de sorte que les écrous ne peuvent pas ressortir de ladite glissière. Il est donc nécessaire d'installer préalablement, lors de la fabrication, ces écrous dans la glissière, avant de mettre en place les caches. Il s'agit d'une étape de fabrication supplémentaire, qui est difficilement automatisable et qui doit être effectuée manuellement par un opérateur en usine. Les coûts de fabrication, et donc d'achat s'en trouvent augmentés. De plus, lorsque l'installateur ou l'utilisateur final doit mettre en place le dispositif de fixation, il doit rechercher l'écrou et le faire remonter dans le montant, généralement au moyen d'un outil de type tournevis, susceptible d'endommager le filetage dudit écrou. En outre, dans la configuration des figures 1a et 1b, la glissière est relativement profonde, de sorte que le filetage de l'écrou se trouve éloigné de l'entrée de ladite glissière. Cet éloignement de l'écrou entraîne un risque d'endommager le filetage à cause d'un vissage de travers fait par un installateur ou un utilisateur final inexpérimenté.

L'invention vise à résoudre tout ou partie des problèmes précités. En particulier, un objectif de l'invention est de proposer un dispositif de fixation murale du type décrit dans EP 2.992.797 dont la conception est simple, peu onéreuse en termes de fabrication et d'achat, et dont la mise en place est aisée, même par un installateur ou un utilisateur final inexpérimenté.

### Présentation de l'invention.

La solution proposée par l'invention est un appareil de chauffage comportant au moins un montant vertical, lequel montant est pourvu d'un dispositif de fixation murale adapté pour écarter ledit appareil du mur sur lequel il est destiné à être fixé et adapté pour régler la hauteur dudit appareil par rapport audit mur, le dispositif de fixation murale comprend :
- une glissière longitudinale verticale installée sur une paroi arrière du montant,
- un premier élément de fixation adapté pour se déplacer verticalement le long de la glissière de manière à régler la position verticale de l'appareil,
- un moyen de blocage en position du premier élément de fixation dans la glissière,
et dans lequel :
- la glissière présente une première paroi latérale et une seconde paroi latérale définissant une gorge ouverte, laquelle première paroi latérale présente un retour,
- le premier élément de fixation coopère avec un crochet de fixation adapté pour être en prise avec le retour, lequel crochet est conformé pour s'engager de manière frontale dans la gorge,
- le moyen de blocage se présente sous la forme d'au moins une vis en prise d'une part avec le premier élément de fixation et d'autre part avec le crochet de fixation de sorte qu'un vissage de ladite vis assure un contact de blocage entre ledit crochet et le retour.

L'utilisation d'un crochet qui coopère avec un retour aménagé dans la glissière est une solution constructive particulièrement simple, qui peut être rapidement mise en place par l'utilisateur final pour régler la hauteur de fixation de son appareil de chauffage. En outre, le crochet pouvant s'insérer de manière frontale dans la gorge de la glissière, il n'est plus nécessaire de l'installer préalablement lors de la fabrication. Il peut au contraire être installé facilement lors de la phase de montage finale, directement dans la position souhaitée, sans avoir à l'insérer depuis les extrémités inférieure et supérieure obturées de la glissière.

D'autres caractéristiques avantageuses de l'invention sont listées ci-dessous. Chacune de ces caractéristiques peut être considérée seule ou en combinaison avec les caractéristiques remarquables définies ci-dessus. Chacune de ces caractéristiques contribue, le cas échéant, à la résolution de problèmes techniques spécifiques définis plus avant dans la description et auxquels ne participent pas nécessairement les caractéristiques remarquables définies ci-dessus. Ces dernières peuvent faire l'objet, le cas échéant, d'une ou plusieurs demandes de brevet divisionnaires :
- Selon un mode de réalisation, le crochet de fixation comprend une portion active adaptée pour être en prise avec le retour, laquelle portion active a une épaisseur inférieure à la largeur de l'ouverture de la gorge.
- Selon un mode de réalisation, le crochet de fixation présente deux ailettes agencées en équerre, une première ailette étant adaptée pour être en prise avec la vis, la seconde ailette étant adaptée pour s'insérer frontalement dans la gorge et portant la portion active.
- Selon un mode de réalisation, le premier élément de fixation comprend un aménagement interne pour recevoir le crochet de fixation, lequel aménagement présente une glissière dans laquelle s'engagent les bords de la seconde ailette.

- Selon un mode de réalisation, la première ailette est moins large que la seconde ailette de manière à laisser libres les bords de ladite seconde ailette qui s'engagent dans la glissière.
- Selon un mode de réalisation, le premier élément de fixation présente une portion adaptée pour s'engager dans la gorge de manière à pousser ou contraindre le crochet de fixation vers la première paroi latérale de la glissière.
- Selon un mode de réalisation, la portion de l'élément de fixation coopère avec la seconde paroi latérale de la glissière pour former un élément de guidage dudit élément de fixation lorsque celui-ci se déplace le long de ladite glissière.
- Selon un mode de réalisation : - le montant est réalisé en au moins deux parties solidarisées par des vis ou rivets dont les têtes font saillie depuis la paroi arrière dudit montant ; - le premier élément de fixation est conformé pour coiffer une ou plusieurs desdites têtes lorsque le crochet de fixation est en prise avec le retour.
- Selon un mode de réalisation : - le dispositif de fixation comprend un second élément de fixation adapté pour se fixer contre un mur ; - le premier élément de fixation est adapté pour s'assembler avec le second élément de fixation.

### Brève description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
[Fig. 1a] précitée est une vue en coupe montrant un agencement d'une glissière dans un montant de sèche-serviette, selon l'art antérieur.
[Fig. 1b] précitée est une vue en coupe montrant un autre agencement d'une glissière dans un montant de sèche-serviette, selon l'art antérieur.
[Fig. 2] est une vue montrant partiellement un sèche-serviette et, en éclatée, un dispositif de fixation selon l'invention.
[Fig. 3a] est une vue arrière, en éclatée, montrant un mode de réalisation du premier élément de fixation, du crochet de fixation et de la vis.
[Fig. 3b] est une vue avant, en éclatée, des éléments de la figure 3a.
[Fig. 3c] est une vue en perspective montrant les éléments des figures 3a et 3b à l'état assemblé.
[Fig. 4] est une vue en coupe montrant en détail le crochet de fixation et la glissière.
[Fig. 5] illustre différentes étapes de l'installation du premier élément de fixation équipé du crochet de fixation, dans la glissière.
[Fig. 6] est une vue en coupe d'un dispositif de fixation selon l'invention.

### Description des modes de réalisation.

Par souci de clarté, les précisions suivantes sont apportées à certains termes utilisés dans la description et les revendications :
- Tel qu'utilisé ici, sauf indication contraire, l'utilisation des adjectifs ordinaux « premier », « deuxième », etc., pour décrire un objet indique simplement que différentes occurrences d'objets similaires sont mentionnées et n'implique pas que les objets ainsi décrits doivent être dans une séquence donnée, que ce soit dans le temps, dans l'espace, dans un classement ou de toute autre manière.
- De même, l'utilisation des adjectifs « droite/gauche », « avant/arrière », « haut/bas », etc., permet de décrire simplement la position d'un objet dans la configuration des figures annexées, mais n'implique pas nécessairement qu'en pratique, des objets similaires soient dans la même position.
- « X et/ou Y » signifie : X seul ou Y seul ou X+Y.
- D'une manière générale, on appréciera que les différents dessins ne soient pas dessinés à l'échelle d'une figure à l'autre ni à l'intérieur d'une figure donnée, et notamment que des éléments de l'invention peuvent être arbitrairement dessinés pour faciliter la lecture des dessins.

L'appareil de chauffage est préférentiellement un sèche-serviettes, mais il peut également se présenter sous la forme d'un radiateur ou de tout autre appareil de chauffage que l'on souhaite fixer au mur.

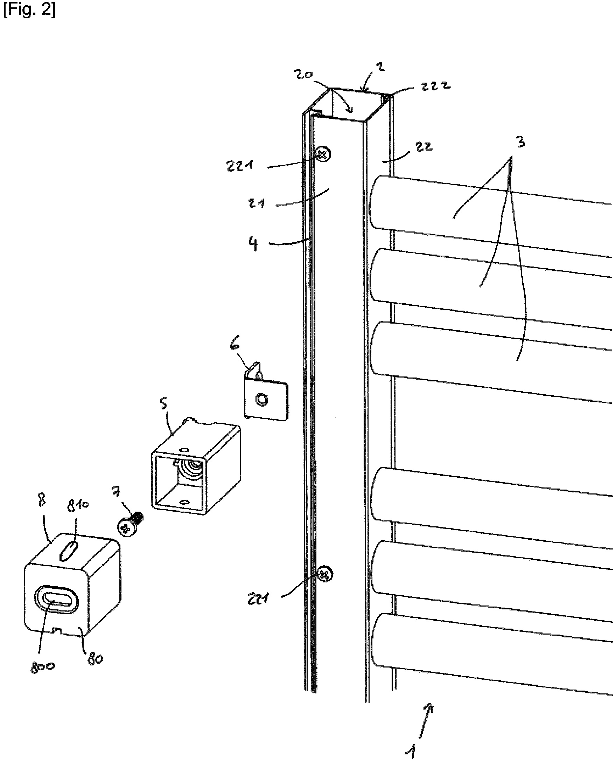

Sur la figure 2, le sèche-serviettes 1 comprend un montant vertical 2 sur lequel sont disposées des barres de séchage 3. Le sèche-serviettes 1 peut comporter deux ou plusieurs autres montants verticaux 2 entre lesquels sont installées les barres 3, le nombre de montants dépendant de l'encombrement du sèche-serviette, notamment de sa largeur. Le nombre de barres 3 peut varier de 1 à 40 en fonction de la hauteur du sèche-serviettes 1.

Le montant 2 a par exemple une longueur comprise entre 20 cm et 2 m. Il est réalisé en métal (ex : aluminium) ou en plastique et est obtenus par extrusion ou par moulage. Le montant 2 est creux de sorte qu'il présente une cavité interne 20 dans laquelle sont installés les câblages électriques des résistances chauffantes des barres 3, la carte électronique d'un thermostat, différentes connectiques et de manière plus générale des éléments électriques, électroniques et/ou fluidiques permettant de chauffer les barres 3 et réguler leur température. Sur la figure 2, le montant 2 a une section carrée, mais pourrait être de section rectangulaire, circulaire, ovale, etc. L'extrémité supérieure et inférieure du montant 2 est obturée par des caches (non représentés).

Les barres de séchage 3 ont une section rectangulaire, ovale, ronde, etc. De manière connue de l'homme du métier, elles renferment une résistance électrique ou sont traversées par un fluide caloporteur. Sur les figures annexées, ces barres de séchage 3 sont horizontales et disposées les unes au-dessus des autres. Elles sont fixées de manière classique au montant 2. Par exemple, les extrémités des barres 3 s'emboîtent dans une plaque 22 qui se positionne sur le montant 2 de manière à obturer la partie ouverte de leur section. Le positionnement de la plaque 22 est assuré par une gorge longitudinale 220 dans laquelle une bordure de ladite plaque se loge. Le maintien en position est assuré par des vis de fixation ou rivets 221. Selon un autre mode de réalisation, les barres 3 sont montées pivotantes sur le montant 2. La technique d'assemblage des barres 3 sur le montant 2 ne faisant pas partie de la présente invention, elle ne sera pas décrite ici plus en détail.

Le montant 2 est pourvu d'un dispositif de fixation murale adapté pour écarter l'appareil 1 du mur sur lequel il est destiné à être fixé et adapté pour régler la hauteur dudit appareil par rapport audit mur. Dans le mode de réalisation illustré sur la figure 2, le dispositif de fixation comprend une glissière longitudinale verticale 4, un premier élément de fixation 5, un crochet de fixation 6 et un moyen 7 pour bloquer en position ce premier élément de fixation dans cette glissière.

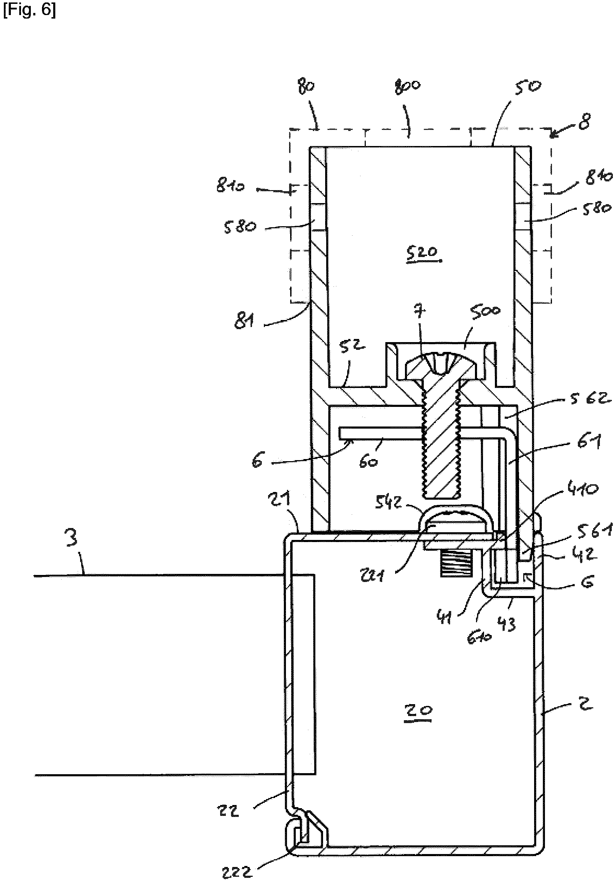

Selon le mode de réalisation des figures 2 et 6, la glissière 4 est installée sur la paroi arrière 21 du montant 2, c'est-à-dire sur la paroi qui, en usage, est en vis-à-vis du mur. La glissière 4 peut s'étendre sur toute la longueur du montant 2 ou sur une partie seulement. Elle peut être continue ou discontinue. Selon un mode de réalisation, le montant 2 et la glissière 4 forment une pièce monobloc obtenue par moulage ou extrusion. En variante, on peut envisager de rapporter la glissière sur la paroi arrière 21, et de la fixer par soudage, collage, vissage, rivetage, etc.

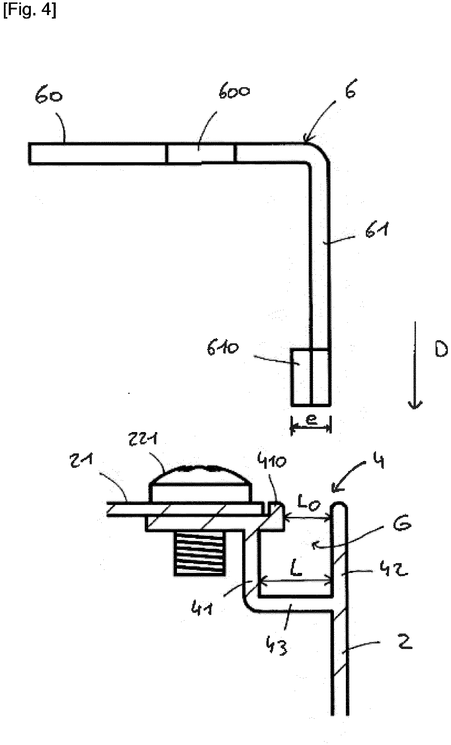

En se rapportant à la figure 4, la glissière 4 présente une première paroi latérale 41 et une seconde paroi latérale 42 définissant une gorge ouverte G. Selon un mode préféré de réalisation, l'ouverture de la gorge G est située du côté de la paroi arrière 21 du montant 2. Cette ouverture débouche au niveau de la paroi arrière 21. Elle peut venir à fleur de la paroi arrière 21 ou être en saillie de ladite paroi ou en retrait de ladite paroi.

Sur la figure 4, la gorge G est également délimitée par une paroi de fond 43 de sorte que ladite gorge ne débouche pas dans la cavité interne 20 du montant 2, l'étanchéité de ladite cavité étant ainsi préservée. Les parois latérales 41, 42 sont droites, mais peuvent être, le cas échéant, incurvées, courbées et/ou non droites. À titre d'exemple, la gorge G a une largeur L comprise entre 3 mm et 3 cm et une profondeur comprise entre 1 mm et 1 cm. Selon un mode de réalisation, le retour 410 et la première paroi 41 forment une pièce monobloc obtenue par moulage ou extrusion. En variante, on peut envisager de rapporter le retour 410 sur la première paroi 41 et la fixer par soudage, collage, vissage, rivetage, etc.

La première paroi latérale présente un retour 410. Selon le mode de réalisation de la figure 4, le retour 410 se présente sous la forme d'une lèvre disposée à l'extrémité supérieure de la première paroi, c'est-à-dire au niveau de l'ouverture de la gorge G. Le retour 410 est orienté perpendiculairement ou sensiblement perpendiculairement à la première paroi 41. Selon un autre mode de réalisation, le retour 410 est orienté de manière oblique de sorte que l'insertion du crochet 6 soit davantage facilitée. Le retour 410 est configuré de sorte que la largeur Lo de l'ouverture de la gorge G soit inférieure à la largeur L de ladite gorge. À titre d'exemple, le retour 410 peut s'étendre au-dessus de la gorge sur une longueur de 1 mm à 1 cm. Son épaisseur correspond par exemple à celle des parois latérales 41, 42.

Le crochet 6 est adapté pour être en prise avec le retour 410. Le crochet 6 peut être réalisé en métal ou en plastique. Sur les figures annexées, le crochet 6 présente deux ailettes 60 et 61 agencées en équerre. Le crochet 6 a ainsi une forme de L. À titre d'exemple, les ailettes 60, 61 ont une forme rectangulaire, dont la longueur est comprise entre 5 mm et 5 cm, la largeur comprise entre 5 mm et 3 cm et l'épaisseur comprise entre 1 mm et 5 mm. La première ailette 60 et la seconde ailette 61 n'ont pas nécessairement la même forme. Pour simplifier la conception, les ailettes 60, 61 sont préférentiellement obtenues par pliage ou emboutissage d'une même plaque.

La première ailette 60 est adaptée pour être en prise avec la vis 7 et présente à cet effet un taraudage 600. La seconde ailette 61 est adaptée pour s'engager frontalement dans la gorge G (selon la direction D sur la figure 4) de sorte qu'il n'est pas nécessaire d'insérer le crochet 6 depuis les extrémités inférieure ou supérieure du montant 2. Il suffit de positionner le crochet 2 en face de la glissière 4, à une position en hauteur souhaitée, et de l'insérer dans la gorge G.

Selon le mode de réalisation de la figure 4, la seconde ailette 61 porte une portion active 610 se présentant sous la forme d'une butée. Comme illustré sur la figure 6, cette portion active 610 vient en prise avec le retour 410 lorsque la seconde ailette 61 est insérée dans la gorge G. Cette portion active 610 a une épaisseur « e » qui est inférieure à la largeur Lo de l'ouverture de la gorge G, par exemple inférieure de 1 mm à 5 mm, de sorte que la seconde ailette 61 puisse facilement s'insérer dans ladite gorge sans que ladite portion active ne fasse obstacle.

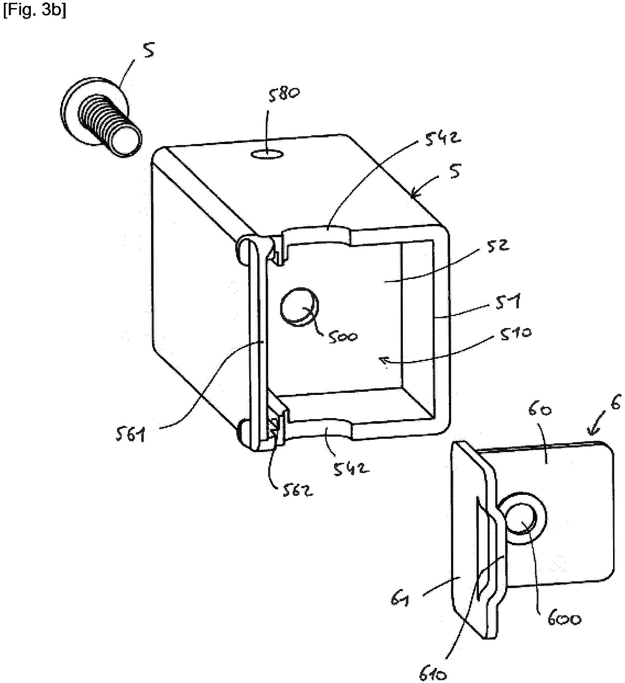

Comme cela apparaît sur la figure 3b, la portion active 610 est avantageusement réalisée par emboutissage d'une partie de l'extrémité inférieure de la seconde ailette 61. Cet emboutissage a pour effet de former une protubérance qui fait saillie depuis une face de la seconde ailette 61, par exemple de 1 mm à 5 mm. Ce procédé permet de conformer très simplement et à moindres coûts le crochet 6. Selon une variante de réalisation, on forme la portion active 610 en rapportant un élément formant butée sur la seconde ailette 61 et le fixer par soudage, collage, vissage, rivetage, etc. Selon une autre variante de réalisation, la portion active 610 est obtenue par pliage de l'extrémité inférieure de la seconde ailette 61, par exemple un pliage à 90°.

Le premier élément de fixation 5 est adapté pour coopérer avec le crochet 6. Selon un mode de réalisation, cet élément de fixation 5 forme une entretoise qui permet d'écarter le montant 2 (et donc l'appareil 1) du mur, d'une distance comprise entre 1 cm et 10 cm. En pratique, chaque montant 2 comprend deux premiers éléments de fixations 5 qui sont écartés l'une de l'autre pour éviter tout basculement de l'appareil 1 une fois qu'il est installé contre un mur. Ces premiers éléments de fixations 5 sont préférentiellement maintenus écartés l'un de l'autre d'une distance maximale proche de la longueur du montant 2. Un écartement inférieur est toutefois acceptable.

Sur les figures 2 à 6, le premier élément de fixation 5 se présente sous la forme d'une pièce en forme de cube ou de pavé, mais pourrait avoir une autre forme, par exemple d'un cylindre. Il présente une première extrémité 50 et une seconde extrémité ouverte 51. La première extrémité 50 est préférentiellement ouverte, mais pourrait être fermée. Le premier élément de fixation 5 peut être réalisé en plastique ou en métal et être obtenu par moulage ou usinage. À titre d'exemple, sa longueur et sa largeur sont comprises entre 2 cm et 10 cm et l'épaisseur de sa paroi comprise entre 1 mm et 5 mm.

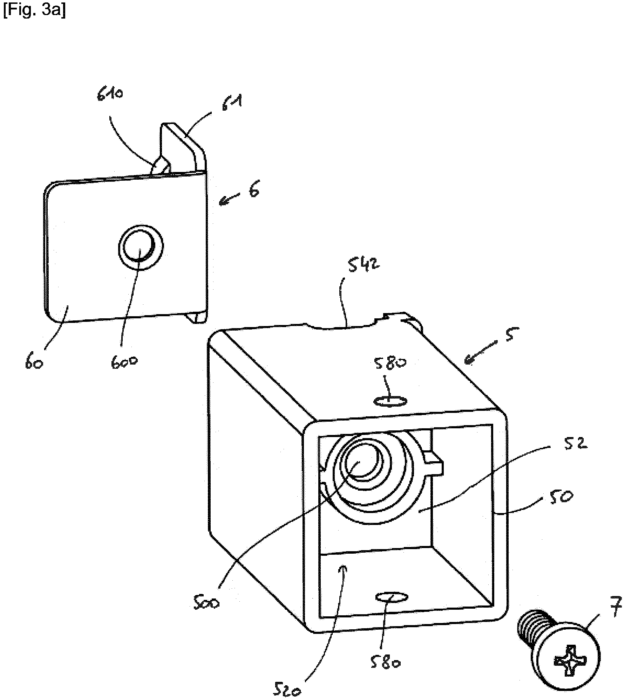

Sur les figures 3a et 3b, le premier élément de fixation 5 présente un aménagement interne 510, accessible depuis la seconde extrémité ouverte 51, qui est adapté pour recevoir le crochet 6. Lorsque le crochet 6 est installé dans l'aménagement interne 510, le taraudage 600 est positionné en vis-à-vis d'un orifice 500 ménagé dans une paroi 52 du premier élément de fixation 5 (figure 6). Cette paroi 52 est située sensiblement au milieu du premier élément de fixation 5, de sorte que celui-ci présente un second aménagement interne 520. Selon une variante de réalisation, cette paroi est une paroi de fermeture de la première extrémité 50, de sorte que le premier élément de fixation 5 présente seulement l'aménagement interne 510.

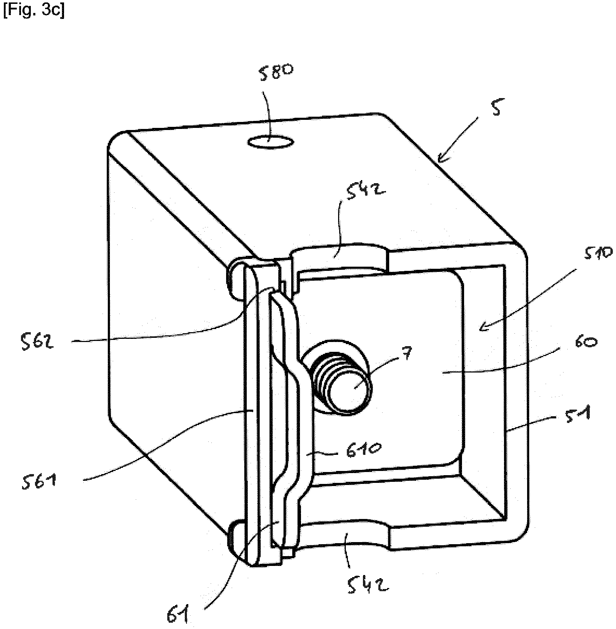

En se rapportant aux figures 3a, 3b, 3c et 6, la vis 7 est installée depuis la première ouverture 50 et passe au travers de l'orifice 500 pour venir en prise dans le taraudage 600. La tête de la vis reste en contact avec la paroi 52. En vissant la vis 7 dans le taraudage 600, le crochet 6 rentre progressivement dans l'aménagement interne 510, en étant notamment tiré vers la paroi 52 de sorte que la seconde ailette 61 vient se serrer contre le retour 410. On obtient donc un contact de blocage entre le crochet 6 ― et plus particulièrement la portion active 610 de sa seconde ailette 61 - et le retour 410. Ce contact de blocage assure le maintien en position du premier élément de fixation 5 dans la glissière 4. Pour assurer un serrage optimal, le crochet 6 et le premier élément de fixation 5 sont configurés pour que la première ailette 60 reste à distance de la paroi 52 lorsque la portion active 610 est en prise avec le retour 410. Il suffit de dévisser légèrement la vis 7 pour libérer le contact entre le crochet 6 et le retour 410. L'installateur peut alors faire glisser le premier élément de fixation 5 le long de la glissière 4 jusqu'à la position souhaitée. Une fois cette position atteinte, il suffit de visser la vis 7 pour bloquer en position le premier élément de fixation 5 dans la glissière 4.

Lors du vissage de la vis 7, le crochet 6 peut avoir tendance à se déloger de la gorge G et/ou à se déformer. Aussi, selon un mode de réalisation avantageux, l'aménagement interne 510 présente une glissière 562 dans laquelle est logée la seconde ailette 61 du crochet 6. Cette glissière 562 est préférentiellement obtenue lors du moulage ou de l'usinage du premier élément de fixation 5. Elle peut toutefois être rapportée est fixée par soudage, collage ou vissage.

La glissière 562 permet de bloquer un mouvement latéral intempestif du crochet 6 dans le premier élément de fixation 5, de sorte que ledit crochet ne se déloge pas de la gorge G (ou à tout le moins que la portion active 610 reste en prise avec le retour 410) et/ou que ledit crochet ne se déforme pas, lors du vissage de la vis 7. La glissière 562 permet en outre de conserver le mouvement de translation du crochet 6 généré lors du vissage/dévissage de la vis 7.

Le crochet 6 s'installe dans l'aménagement interne 510, en engageant les bords de la seconde ailette 61 dans l'entrée de la glissière 562 qui débouche au niveau de la seconde extrémité ouverte 51. On pousse ensuite la seconde ailette 61 dans la rainure 562 jusqu'à ce que la vis 7 puisse s'engager dans le taraudage 600. Pour faciliter l'insertion de la seconde ailette 61 dans la glissière 562, la première ailette 60 est moins large que ladite seconde ailette de manière à laisser libres les bords de ladite seconde ailette, lesquels bords s'engagent dans ladite glissière. De manière alternative, on peut envisager de réaliser des encoches dans la première ailette 60 pour laisser passer les rails de la glissière 562.

Selon un mode de réalisation, le premier élément de fixation 5 est conformé pour venir se plaquer contre la paroi arrière 21 du montant 2, après serrage de la vis 7, ce qui non seulement améliore l'esthétique, mais rigidifie également davantage la structure.

Sur les figures 3b, 3c, 5 et 6, le premier élément de fixation 5 présente une portion 561 adaptée pour s'engager dans la gorge G de manière à maintenir le crochet 6 en prise avec le retour 410. Cette portion 561 se présente sous la forme d'une ailette ou d'un rebord qui prolonge une paroi latérale du premier élément de fixation 5. Cette ailette ou rebord 561 a par exemple une largeur comprise entre 2 cm et 10 cm, et une hauteur et une épaisseur comprises entre 1 mm à 5 mm. Lorsque le premier élément de fixation 5 vient se plaquer contre la paroi arrière 21, la portion 561 s'engage dans la gorge G en poussant, ou contraignant, le crochet 6 vers la première paroi latérale 61 de la glissière 4. On s'assure ainsi de maintenir la portion active 610 du crochet 6 en prise avec le retour 410.

La portion 561 du premier élément de fixation 5 assure plusieurs autres fonctions. En premier lieu, elle coopère avec la seconde paroi latérale 42 de la glissière 4 pour former un élément de guidage du premier élément de fixation 5 lorsque celui-ci se déplace le long de ladite glissière. En second lieu, elle bloque un mouvement latéral intempestif du premier élément de fixation 5 lors du vissage de la vis 7.

Comme évoqué précédemment, le montant 2 peut être réalisé en au moins deux parties : le corps du montant 2 et la plaque 22. Ces deux parties sont solidarisées entre par des vis ou rivets 221 dont les têtes font saillie depuis la paroi arrière 21 du montant 2. Il est avantageux que ces têtes de vis ou rivets 221 ne viennent pas gêner le coulissement du premier élément de fixation 5 le long de la glissière 4. Pour ce faire, le premier élément de fixation 5 est conformé pour coiffer une ou plusieurs desdites têtes lorsque le crochet 6 est en prise avec la lèvre 41. Sur les figures 2 à 6, cette conformation du premier élément de fixation 5 consiste en des encoches 542 réalisées dans les parois latérales du premier élément de fixation 5. Ces encoches 542 ont le même profil que les têtes des vis ou rivets 221. Le premier élément de fixation 5 peut ainsi passer sur les têtes des vis ou rivets 221 sans blocage.

En se rapportant aux figures 2 et 6, le dispositif de fixation comprend un second élément de fixation 8 adapté pour se fixer contre un mur. Selon un mode de réalisation, le second élément de fixation 8 se présente sous la forme d'une pièce en forme de cube ou de pavé, mais pourrait avoir une autre forme, par exemple la forme d'un cylindre ou se présente sous la forme d'une patte de fixation en forme de U. Il présente une première extrémité 80 et une seconde extrémité ouverte 81. La première extrémité 80 est pourvue d'un trou oblong 800 pour le passage d'une vis de fixation murale (non représentées). Ce trou oblong 800 est configuré pour autoriser un débattement latéral du second élément de fixation 8 par rapport aux trous de fixation muraux. Le second élément de fixation 8 est adapté pour s'insérer sur (ou dans) le premier élément de fixation 5 depuis la première extrémité 50 de celui-ci. Une ou plusieurs parois latérales du second élément de fixation 8 présentent un trou oblong 810. Lorsque le second élément de fixation 8 est installé dans sur (ou dans) le premier élément de fixation 5, le ou les trous oblongs 810 sont chacun situé en vis-à-vis d'un taraudage 580 ménagé dans une ou plusieurs parois latérales de l'aménagement 520. Le maintien en position se fait par des vis de fixation qui passent au travers des trous oblongs 810 et qui viennent en prise avec les taraudages 580. D'autres solutions peuvent être envisagées pour réaliser l'assemblage des éléments de fixation 5 et 8, par exemple une solution du type illustré sur la figure 8 du document EP 2.992.797 précité.

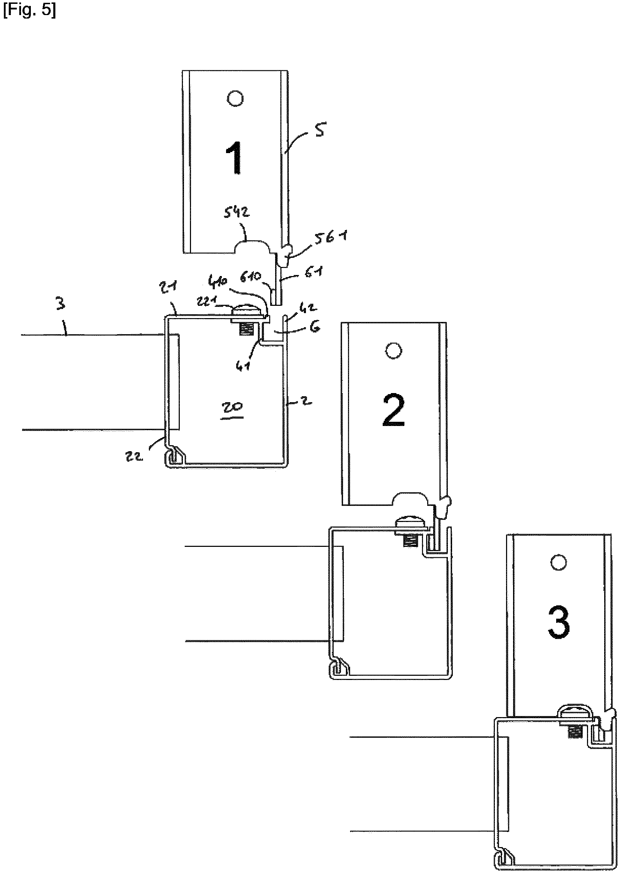

La fixation de l'appareil 1 contre un mur se fait de la manière suivante : tout d'abord, l'installateur fixe les seconds éléments de fixation 8 sur le mur, dans un endroit qui lui convient, par exemple entre des joints de carrelage. Ensuite, l'installateur peut prépositionner l'appareil 1 au niveau des seconds éléments de fixation 8. Il peut effectuer cette étape en compagnie de l'utilisateur final qui lui indiquera la position adéquate souhaitée. Cela étant fait, l'installateur installe un crochet 6 dans chaque premier élément de fixation 5 et engage la vis 7 pour empêcher le crochet de tomber. Le crochet 6 est positionné de manière à ce que la seconde ailette 61 dépasse de la seconde extrémité ouverte 51 (figure 5, position 1). Le crochet 6 est alors engagé dans la gorge G (figure 5, position 2). Le crochet 6 peut directement s'insérer frontalement dans la gorge G, dans la position souhaitée. L'installateur visse alors légèrement la vis 7 pour engager le premier élément de fixation 5 contre la paroi arrière 21 (figure 4, position 3). La portion 561 du premier élément de fixation 5 s'engage dans la gorge G et la portion active 610 du crochet 6 est positionné en vis-à-vis du retour 410. Si la position est la bonne, la vis 7 est vissée jusqu'à obtenir un contact de blocage entre le crochet 6 et le retour 410. Dans le cas contraire, l'installateur fait préalablement glisser le premier élément de fixation 5 le long de la glissière 4 jusqu'à la position adéquate puis effectue le serrage. L'installateur peut dès lors facilement assembler les premiers éléments de fixation 5 avec les seconds éléments de fixation 8. On comprend ainsi que la mise en place de l'appareil 1 est très simple et très rapide à mettre en œuvre et peut être fait directement par l'utilisateur final. Et si l'utilisateur souhaite descendre ou monter son appareil, il lui suffit de désolidariser les premiers éléments de fixation 5 des seconds éléments de fixation 8, et de modifier la position desdits premiers éléments de fixation le long de la glissière 4 en desserrant légèrement la vis 7.

Une ou plusieurs caractéristiques exposées seulement dans un mode de réalisation peuvent être combinées avec une ou plusieurs autres caractéristiques exposées seulement dans un autre mode de réalisation. L'agencement des différents éléments et/ou moyens et/ou étapes de l'invention, dans les modes de réalisation décrits ci-dessus, ne doit pas être compris comme exigeant un tel agencement dans toutes les implémentations. D'autres variantes peuvent être prévues et notamment :
- La vis 7 peut se présenter sous la forme d'une tige filetée solidaire de la première ailette 60, laquelle tige passe au travers de l'orifice 500 pour venir en prise avec un écrou ou un écrou papillon accessible depuis la première ouverture 50 du premier élément de fixation 5. C'est la rotation de l'écrou dans un sens ou dans l'autre qui permet de déplacer le crochet 6 vers sa position de serrage.
- Deux ou plusieurs autres vis 7 peuvent être agencées pour être en prise avec le premier élément de fixation 5 et avec le crochet 6, pour assurer le blocage en position dudit premier élément de fixation dans la glissière 4.
- D'autres configurations du crochet 6 peuvent être envisagées pour qu'il puisse s'engager de manière frontale dans la gorge G et/ou qu'il puisse être en prise avec le retour 410.
- La portion 561 du premier élément de fixation 5 est avantageuse mais non nécessaire. L'utilisateur peut par exemple pousser le premier élément de fixation 5 pour pousser ou contraindre le crochet 6 vers la paroi latérale 41 de la glissière 4.

En outre, une ou plusieurs caractéristiques exposées seulement dans un mode de réalisation peuvent être combinées avec une ou plusieurs autres caractéristiques exposées seulement dans un autre mode de réalisation. De même, une ou plusieurs caractéristiques exposées seulement dans un mode de réalisation peuvent être généralisées aux autres modes de réalisation, même si ce ou ces caractéristiques sont décrites seulement en combinaison avec d'autres caractéristiques.

## Revendications

1. Appareil de chauffage (1) comportant au moins un montant vertical, lequel montant est pourvu d'un dispositif de fixation murale adapté pour écarter ledit appareil du mur sur lequel il est destiné à être fixé et adapté pour régler la hauteur dudit appareil par rapport audit mur, le dispositif de fixation murale comprend :
- une glissière (4) longitudinale verticale installée sur une paroi arrière (21) du montant (2),
- un premier élément de fixation (5) adapté pour se déplacer verticalement le long de la glissière (4) de manière à régler la position verticale de l'appareil (1),
- un moyen (7) de blocage en position du premier élément de fixation (5) dans la glissière (4),
**caractérisé en ce que** :
- la glissière (4) présente une première paroi latérale (41) et une seconde paroi latérale (42) définissant une gorge (G) ouverte, laquelle première paroi latérale présente un retour (410),
- le premier élément de fixation (5) coopère avec un crochet de fixation (6) adapté pour être en prise avec le retour (410), lequel crochet est conformé pour s'engager de manière frontale dans la gorge (G),
- le moyen de blocage se présente sous la forme d'au moins une vis (7) en prise d'une part avec le premier élément de fixation (5) et d'autre part avec le crochet de fixation (6) de sorte qu'un vissage de ladite vis assure un contact de blocage entre ledit crochet et le retour (410).

2. Appareil selon la revendication 1, dans lequel le crochet de fixation (6) comprend une portion active (610) adaptée pour être en prise avec le retour (410), laquelle portion active a une épaisseur (e) inférieure à la largeur (Lo) de l'ouverture de la gorge (G).

3. Appareil selon la revendication 2, dans lequel le crochet de fixation (6) présente deux ailettes (60, 61) agencées en équerre, une première ailette (60) étant adaptée pour être en prise avec la vis (7), la seconde ailette (61) étant adaptée pour s'insérer frontalement dans la gorge (G) et portant la portion active (610).

4. Appareil selon la revendication 3, dans lequel le premier élément de fixation (5) comprend un aménagement interne (510) pour recevoir le crochet de fixation (6), lequel aménagement présente une glissière (562) dans laquelle s'engagent les bords de la seconde ailette (61).

5. Appareil selon la revendication 4, dans lequel la première ailette (60) est moins large que la seconde ailette (61) de manière à laisser libres les bords de ladite seconde ailette qui s'engagent dans la glissière (562).

6. Appareil selon l'une des revendications précédentes, dans lequel le premier élément de fixation (5) présente une portion (561) adaptée pour s'engager dans la gorge (G) de manière à pousser ou contraindre le crochet de fixation (6) vers la première paroi latérale (61) de la glissière (4).

7. Appareil selon la revendication 6, dans lequel la portion (561) de l'élément de fixation (5) coopère avec la seconde paroi latérale (42) de la glissière (4) pour former un élément de guidage dudit élément de fixation lorsque celui-ci se déplace le long de ladite glissière.

8. Appareil selon l'une des revendications précédentes, dans lequel :
- le montant (2) est réalisé en au moins deux parties solidarisées par des vis ou rivets (221) dont les têtes font saillie depuis la paroi arrière (21) dudit montant,
- le premier élément de fixation (5) est conformé pour coiffer une ou plusieurs desdites têtes lorsque le crochet de fixation (6) est en prise avec le retour (410).

9. Appareil selon l'une des revendications précédentes, dans lequel :
- le dispositif de fixation comprend un second élément de fixation (8) adapté pour se fixer contre un mur,
- le premier élément de fixation (5) est adapté pour s'assembler avec le second élément de fixation (8).
